# EUROPEAN PATENT SPECIFICATION

(11) **EP 0 588 592 B1**
(45) Date of publication and mention of the grant of the patent: **14.04.1999**
(21) Application number: 93307223.3
(22) Date of filing: 14.09.1993
(51) Int. Cl.: F02B 19/02

(54) **High compression ratio internal-combustion engine**
Hochverdichtende Brennkraftmaschine
Moteur à combustion interne à haut taux de compression

(30) Priority: 14.09.1992 JP 271071/92; 29.09.1992 JP 283741/92; 11.11.1992 JP 326055/92
(43) Date of publication of application: 23.03.1994
(73) Proprietor: ISUZU CERAMICS RESEARCH INSTITUTE CO., LTD., Fujisawa-shi Kanagawa 252 (JP)
(72) Inventor: Kawamura, Hideo, Koza-gun, Kanagawa (JP)
(74) Representative: Brunner, Michael John

(56) References cited:
- EP-A- 0 216 027
- EP-A- 0 276 193
- EP-A- 0 366 490
- EP-A- 0 503 973
- FR-A- 2 342 399
- US-A- 4 300 497
- US-A- 4 372 264
- Motortechnische Zeitschrift vol. 48 Nr.3, March 1987, page 91

## Description

This invention relates to a high compression ratio internal-combustion engine having a pre-chamber. A higher compression ratio (ε) generally leads to a better performance of the engine and a gasoline engine has a compression ratio of about 8-10. However, the engine does not have sufficient performance when this compression ratio is further increased, owing to the generation of knock in the combustion chamber of the engine.

In a diesel engine, fuel is injected to the air compressed in the combustion room and burns and a diesel engine has a compression ratio increased to about 18-23 and an improved performance.

A gasoline engine mixes the fuel with air which forms a so-called pre-mixture beforehand outside the engine which is then introduced into the cylinder. When the compression ratio of the gasoline engine is raised to more than 8-10 and the temperature of the compressed air in the combustion room is raised furthermore, the pre-mixture gas introduced into the combustion ignites before a spark is ignited and knock is generated. It is therefore difficult, in a gasoline engine, to improve the compression ratio much.

On the other hand, the fuels used in internal combustion engines are fossil fuels such as gasoline, light oil and natural gas. When this fossil fuel is used for the fuel of the engine, a lot of materials which pollute the atmosphere such as nitrogen oxide and soot are included in exhaust gas.

An engine which uses methanol with little pollution as a fuel has been developed. The content of soot and the nitrogen oxide in exhaust gas decreases when methanol is used for the fuel of the engine, and, when the load of the engine is high, no particular problems are caused. However, when the engine load is low, the wall temperature of the combustion chamber decreases because the evaporating latent heat of the methanol is large and the ignition temperature is high. Therefore, evaporation and activation of the methanol become difficult and it does not burn smoothly in the combustion chamber of the engine.

In view of the aforesaid drawbacks of the conventional internal-combustion engines, it is an object of the invention to provide a high compression ratio internal-combustion engine, so that even if the compression ratio of the air of the engine is raised to a level more than the conventional, problems are not caused, even if methanol is used as the fuel.

US-A-4300497 discloses a diesel engine having an insulated pre-combustion chamber.

EP-A-0366490 discloses a heat insulated engine with a swirl chamber.

According to the present invention, there is provided a high compression ratio internal combustion engine, for use with highly volatile fuel such as methanol, the engine comprising:
a main chamber and a pre-chamber;
a connection passage between the pre-chamber and the main chamber;
a control valve for opening and closing the connection passage;
a driver for opening and shutting the control valve;
an injection nozzle for injecting fuel to the pre-chamber;
means for controlling said control valve to close during the exhaust stroke and the induction stroke of the engine and to open during the last stage of the compression stroke; and,
means for controlling the injection nozzle to inject fuel to the pre-chamber during the exhaust stroke, characterised in that
the pre-chamber and a valve seat are integrally formed from a one-piece thermally-insulating body; and
an insulating air space is formed around the pre-chamber; and
   the or each engine piston (202) has a piston head (221) which slopes such that the greatest gap is under the prechamber (203).

The pre-chamber thus has a heat insulated structure. Therefore, the inside of pre-chamber can be maintained at a high temperature.

The fuel ejected to the pre-chamber becomes a mixture activated inside of the pre-chamber at a high temperature. Because the fuel reacts with little oxygen which remains in the pre-chamber, generation of NO_{X} is controlled to the minimum.

When the control valve is opened at the end of the compression stroke, the mixture blows from the pre-chamber to the main chamber through the connection passage. The mixture reaching the main chamber burns explosively because the mixture is activated and is reacted with a large amount of air.

In the drawings:
Fig. 1 is a fragmentary cross-sectional view of an example of the present invention; and,
Fig. 2 is an explanatory drawing showing the state of the motion of the engine.

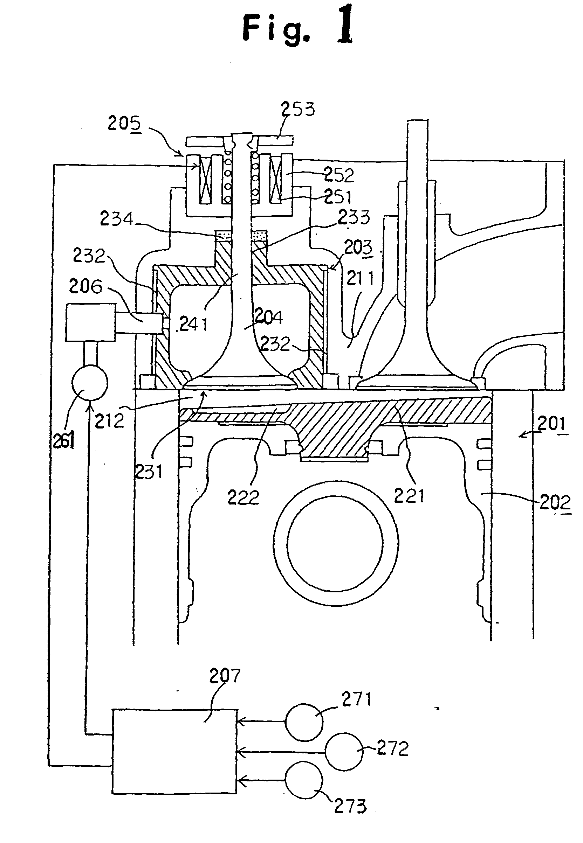

In Fig. 1, an engine is shown with a cylinder 201 which has a piston 202 which can be moved up and down. There are provided an inlet valve 204 and an exhaust valve and, in a cylinder head 211, a pre-chamber 203 which becomes a precombustion chamber. The cylinder head 221 is composed of ceramics which has high heat resistance and high strength. A slope is formed on the piston head 221 and the part under the pre-chamber 203 is formed as the lowest point for the slope. The slope is shallowly formed while going away from the under part of the pre-chamber 203. There is a hollow part 222 on the slope of the piston head 221. The hollow part 222 operates as an accumulator of air.

The pre-chamber 203 is made from a high strength, heat resistant, and heat insulating material for example like silicon nitride.

An air layer 232 of heat insulation is formed on the outer wall of the pre-chamber 203, a connection passage 231 connected with the main chamber 212 is formed in a central part of the pre-chamber 203, and the inlet valve 204 which opens and closes the connection passage 231 is installed on it as a control valve. The stem 241 of this control valve 204 is slidably supported in a bore 233 which penetrates through a central upper part of the wall of the pre-chamber 203. Therefore, the control valve 204 can move in the direction of the axis of the stem 241 with a vertical motion. A heat insulation material 234 is installed above the bore 233 and heat in pre-chamber is prevented from running away from stem 241 of control valve 204.

An electromagnetic device 205 is installed above the stem 241 for opening and shutting the control valve 204. When the electric current is passed into the coil 251 of this electromagnetic device 205, core 252 pulls down an armature plate 253 on the stem 241 and thus moves control valve 204 downwards. Control valve 204 opens connection passage 231 of pre-chamber 203. An injection nozzle 206 is installed on the sidewall of pre-chamber 203. The fuel sent from a fuel tank is ejected from the injection nozzle 206 to the inside of the pre-chamber 203.

The fuel injection instruction of this fuel injection pump 261 is commanded by a controller 207. The controller 207 is formed by a microcomputer. The detection signals from rotation sensor 271, load sensor 272, and crank axis position sensing device 273 of the engine, are input to the controller 207. When these detection signals are input to controller 207, a fixed operation is done in the controller 207. The controller 207 commands the operation for the injection pump or electromagnetic device 205 by a program stored in the controller 207.

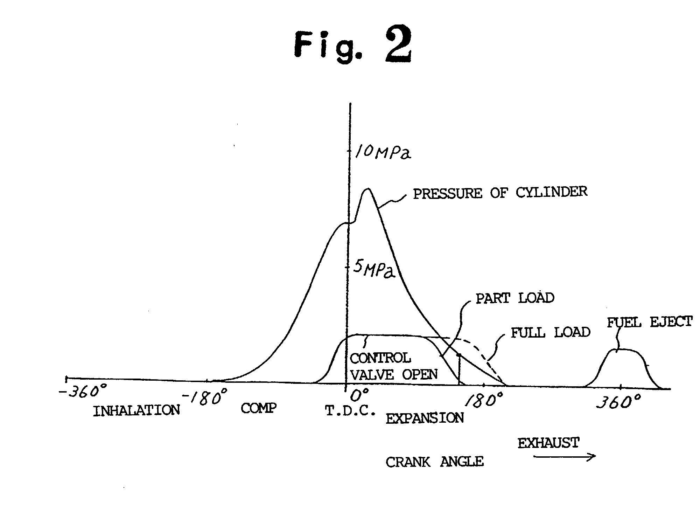

Next, the operation of this example of the invention is explained using the Fig. 2 explanatory drawing showing the state of the motion of the engine.

In the last period of the compression step, the electromagnetic device 205 is operated and the connection passage 231 is opened by the valve 204.

Before the connection passage 231 is opened, methanol fuel is injected by the injection nozzle 206 to the pre-chamber 203. The methanol fuel in the pre-chamber 203 is activated by remaining exhaust gas in the pre-chamber 203 and methanol fuel CH₃OH decomposed to 2H₂+CO.

The connection passage 231 is opened by the control valve 204 at the last period of compression step near the top dead centre point and compressed and hot air is put in to the pre-chamber 203. The activated methanol fuel is mixed by the air and is burned by the hot air, but the fuel in the pre-chamber is so rich that the generation of NOₓ is controlled.

Afterwards, the non-burned fuel and flame generated in the pre-chamber 203 is ejected to the main chamber 212, and methanol fuel and hot air in the main chamber 212 react, and then combustion ends. Therefore, the supplied fuel burns smoothly in the cylinder even if the compression ratio of the engine is raised. Therefore, excellent combustion can be achieved even at a partial load.

As for the temperature in the main combustion chamber, when the engine operates in a high load condition, the fuel ignites easily even if the control valve is opened as shown in Fig. 2 from the end of the compression step to the expansion step as sufficient combustion occurs because the fuel is at higher temperature than at partial load.

## Claims

1. A high compression ratio internal combustion engine, for use with highly volatile fuel such as methanol, the engine comprising:
a main chamber (212) and a pre-chamber (203);
a connection passage (231) between the pre-chamber (203) and the main chamber (212);
a control valve (204) for opening and closing the connection passage (231);
a driver (205) for opening and shutting the control valve (204);
an injection nozzle (206) for injecting fuel to the pre-chamber (203);
means for controlling said control valve (204) to close during the exhaust stroke and the induction stroke of the engine and to open during the last stage of the compression stroke; and, means for controlling the injection nozzle (206) to inject fuel to the pre-chamber (203) during the exhaust stroke; characterised in that:
the pre-chamber (203) and a valve seat are integrally formed from a one-piece thermally-insulating body;
an insulating air space (232) is formed around the pre-chamber (203); and
the or each engine piston (202) has a piston head (221) which slopes such that the greatest gap is under the prechamber (203).

2. An engine according to claim 1, wherein the pre-chamber (203) is made of ceramics materials.

3. An engine according to claim 1 or claim 2, wherein the driver for the control valve (204) is a electromagnetic driver (205).

4. An engine according to claim 1, wherein the piston head (221) has a hollow part (222) for accumulation of air.

## Patentansprüche

1. Hochverdichtende Brennkraftmaschine für die Verwendung mit einem hochflüchtigen Treibstoff, wie Methanol, wobei die Maschine aufweist:
eine Hauptkammer (212) und eine Vorkammer (203);
eine Verbindungspassage (231) zwischen der Vorkammer (203) und der Hauptkammer (212);
ein Steuerventil (204) zum Öffnen und Schließen der Verbindungspassage (231);
einen Antrieb (205) zum Öffnen und Schließen des Steuerventils (204) ;
eine Einspritzdüse (206) zum Einspritzen von Treibstoff in die Vorkammer (203);
Mittel zum Steuern des Steuerventils (204), um dieses während des Auslaßtaktes und des Einlaßtaktes der Maschine zu schließen und während der letzten Stufe des Verdichtungstaktes zu öffnen; und
Mittel zum Steuern der Einspritzdüse (206), um Treibstoff in die Vorkammer (203) während des Auslaßtaktes einzuspritzen; dadurch gekennzeichnet, daß:
die Vorkammer (203) und ein Ventilsitz als Einheit aus einem einstückigen wärmeisolierenden Körper ausgebildet sind;
ein isolierender Luftraum (232) um die Vorkammer (203) ausgebildet ist; und
der oder jeder Maschinenkolben (202) einen Kolbenkopf (221) aufweist, welcher derart abgeschrägt ist, daß sich der größte Spalt unterhalb der Vorkammer (203) befindet.

2. Maschine nach Anspruch 1, bei welcher die Vorkammer (203) aus Keramikmaterial hergestellt ist.

3. Maschine nach Anspruch 1 oder 2, bei welcher der Antrieb für das Steuerventil (204) ein elektromagnetischer Antrieb (205) ist.

4. Maschine nach Anspruch 1, bei welcher der Kolbenkopf (221) einen hohlen Abschnitt (222) zum Akkumulieren von Luft aufweist.

## Revendications

1. Moteur à combustion interne à taux de compression élevé, à utiliser avec un carburant très volatil tel que du méthanol, le moteur comprenant :
une chambre principale (212) et une préchambre (203) ;
un passage de connexion (231) entre la préchambre (203) et la chambre principale (212) ;
une soupape de commande (204) pour ouvrir et pour fermer le passage de connexion (231) ;
un dispositif de pilotage (205) pour ouvrir et pour fermer la soupape de commande (204) ;
une buse d'injection (206) pour injecter du carburant dans la préchambre (203) ;
des moyens pour commander ladite soupape de commande (204) en fermeture pendant la course d'échappement et la course d'admission du moteur et en ouverture pendant la dernière étape de la course de compression ; et,
des moyens pour commander la buse d'injection (206) pour injecter du carburant dans la préchambre (203) pendant la course d'échappement ; caractérisé en ce que :
on forme la préchambre (203) et un siège de soupape d'un seul tenant à partir d'un corps thermiquement isolant en une pièce ;
on forme un espace d'air isolant (232) autour de la préchambre (203) ; et
le piston ou chaque piston (202) du moteur comporte une tête de piston (221) qui est en pente de sorte que l'espacement le plus grand se trouve sous la préchambre (203).

2. Moteur selon la revendication 1, dans lequel on fabrique la préchambre (203) en matière céramique.

3. Moteur selon la revendication 1 ou la revendication 2, dans lequel le dispositif de pilotage pour la soupape de commande (204) est un dispositif électromagnétique (205).

4. Moteur selon la revendication 1, dans lequel la tête de piston (221) possède une partie creuse (222) pour l'accumulation d'air.
